# EUROPÄISCHE PATENTSCHRIFT

(11) **EP 0 989 053 B1**
(45) Veröffentlichungstag und Bekanntmachung des Hinweises auf die Patenterteilung: **03.05.2006**
(21) Anmeldenummer: 99114918.8
(22) Anmeldetag: 30.07.1999
(51) Int. Cl.: B62D 33/06, B62D 25/20

(54) **Bodenkonstruktion eines Lkw-Fahrerhauses**
Floor construction for the cab of a lorry
Construction de plancher d'une cabine d'un camion

(30) Priorität: 27.08.1998 DE 19838941
(43) Veröffentlichungstag der Anmeldung: 29.03.2000
(73) Patentinhaber: MAN Nutzfahrzeuge Aktiengesellschaft, 80976 München (DE); Wilhelm Karmann GmbH, 49016 Osnabrück (DE)
(72) Erfinder: Galway, Gary, Dipl.-Ing., 86926 Greifenberg (DE); Riebeck, Lars, Dipl.-Ing., 85221 Dachau (DE); Breitling, Ulrich, Dr.-Ing., 81245 München (DE); Meister, Mario, Dipl.-Ing., 81241 München (DE); Westing, Franz, Dipl.-Ing., 49205 Hasbergen (DE)

(56) Entgegenhaltungen:
- DE-A- 2 408 548
- DE-A- 19 543 404
- US-A- 3 919 926
- US-A- 4 081 197
- US-A- 5 611 593
- PATENT ABSTRACTS OF JAPAN vol. 2000, no. 02, 29. Februar 2000 (2000-02-29) -& JP 11 301530 A (ISUZU MOTORS LTD), 2. November 1999 (1999-11-02)

## Beschreibung

Die Erfindung betrifft gemäß dem Oberbegriff des Anspruches 1 eine Bodenkonstruktion eines Lkw-Fahrerhauses.

Bei Lkw-Fahrerhäusern wird die tragende Struktur der Bodengruppe in der Regel durch ein für den jeweiligen Motoreinbau entsprechend gestaltetes Motortunnelblech sowie mit diesem verbundene Bodenbleche und Längsträger gebildet. Im Crashfall des Lastkraftwagens kann infolge von Biegung des Fahrerhausbodens um die Querachse, gegebenenfalls in Verbindung mit lokalem Beulen, sowohl in einem vorderen Bereich des Fahrerhauses nahe einer Stirnwand als auch in einem hinteren Bereich vor einem Sitzquerträger des Fahrerhauses der Überlebensraum für Insassen unzulässig eingeschränkt werden.

Aus der gattungsbildenden DE 24 085 48 A ist ein Wagenkastenunterrahmen für Kraftfahrzeuge mit Längsträgern bekannt, die aus mehreren Längsträgergliedern zusammengesetzt sind. Zur Wagenmitte hin schließt sich seitlich an vordere Längsträgerglieder jeweils ein inneres Längsträgerglied an, welches oben und seitlich an einem Tunnel des Wagenkastenunterrahmens angeflanscht ist.

Aus der US 4081 197 A ist eine Bodenkonstruktion bekannt, deren Mitteltunnel zwecks Verstärkung desselben an seinen Längsunterkanten von hieran angeflanschten Längsprofilen überlappt ist.

Aus der DE 195 43 404 A1 ist ein Mitteltunnel für eine Bodengruppe eines Kraftfahrzeuges bekannt, der aus zwei Blechschalen zusammengesetzt ist.

Die US 3 919 926 A zeigt ein Bodentunnelblech eines Fahrzeuges, das von einem gestuft ausgeführten Profil in einteiliger Bauweise komplett überkapselt und verstärkt ist.

Es ist Aufgabe der Erfindung, eine Bodenkonstruktion eines Lkw-Fahrerhauses zu schaffen, die in einem Crashfall des Lastkraftwagens einen ausreichenden Überlebensraum für die Insassen im Fahrerhaus sicherstellt.

Die gestellte Aufgabe ist erfindungsgemäß entsprechend Anspruch 1 durch eine Bodenkonstruktion eines Lkw-Fahrerhauses, mit im wesentlichen einem etwa hutförmig geformten Motortunnelblech, gegebenenfalls mehreren Bodenblechen sowie inneren und äußeren Längs- bzw. Querträgern gelöst. Dabei sind in einem oberen und einem unteren Bereich des Hutprofiles des Motortunnelbleches gebildete, zueinander beabstandet verlaufende obere und untere Längskanten zwecks Längsverstärkung des Motortunnelbleches von zusätzlichen, im Querschnitt etwa hutförmig profilierten Längsträgern abdeckbar und mit diesen verbindbar.

Dabei bildet das Motortunnelblech im Bereich wenigstens seiner oberen Längskanten längs derselben zusammen mit zusätzlichen oberen Längsträgern querschnittsmäßig etwa die Form von geschlossenen Kastenträgern, wobei die längs des Motortunnelbleches auf diesem aufliegend befestigten, zusätzlichen oberen Längsträger fahrerhausinnenseitig des Motortunnelbleches angeordnet sind.

Gemäß einer weiteren Ausgestaltung der Erfindung kann das Motortunnelblech im Bereich wenigstens seiner unteren Längskanten längs derselben zusammen mit zusätzlichen unteren Längsträgern querschnittsmäßig etwa die Form von geschlossenen Kastenträgern bilden, wobei die längs des Motortunnelbleches auf diesem aufliegend befestigten, zusätzlichen unteren Längsträger fahrerhausinnenseitig des Motortunnelbleches angeordnet sind.

Somit sind die zusätzlichen Längsträger bedarfsweise - in Abhängigkeit von gewünschter Stabilität und verfügbarem Bauraum - in unterschiedlicher Anzahl, Einbauposition und Kombination auf dem Motortunnelblech befestigbar. Der technische Fortschritt und der Vorteil der erfindungsgemäßen Lösung besteht darin, dass im Crashfall des Lastkraftwagens die relative Verschiebung von Stirnwand und Sitzbefestigung innerhalb der Bodenkonstruktion des Fahrerhauses gering bleibt und hierbei weder ein lokales Kollidieren noch ein wesentliches Verbiegen der Bodenkonstruktion in Erscheinung tritt. Dies ist insbesondere durch die Verstärkung der oberen bzw. unteren Längskanten des Hutprofiles des Motortunnelbleches sowie gegebenenfalls dessen oberen Horizontalabschnittes mittels zusätzlicher oberer bzw. unterer Längsträger realisierbar. Diese sind in ihrer Längsrichtung wenigstens zwischen Stirnwand und Sitzquerträger, einschließlich geeigneter Verbindungen an den genannten Bauteilen anbringbar. Durch die erfindungsgemäßen Lösungen ist eine günstige Kraftverteilung zwischen den unteren bzw. oberen Längsträgern und den jeweiligen oberen bzw. unteren Längskanten des Motortunnelbleches sowie der Stirnwand und dem Sitzquerträger erzielbar. So können einerseits bei hohem Kraftangriff am Fahrerhaus die Lasten nahezu in einer direkten Linie von vorne nach hinten geleitet werden. Andererseits kann bei tieferen Kraftangriffen am Fahrerhaus, z. B. in Höhe einer vorderen Fahrerhauslagerstelle ein Mittragen des Motortunnelbleches derart erfolgen, dass ein Einknicken sämtlicher Längsträger der Bodenkonstruktion unterbleibt. Die Verstärkung der Längskanten sowie gegebenenfalls des oberen Horizontalabschnittes des Motortunnelbleches mittels zusätzlicher oberer bzw. unterer Längsträger berücksichtigt in ihrer Auslegung den verfügbaren Bauraum im oberen bzw. unteren Bereich des Hutprofiles des Motortunnelbleches und ist an dessen Kontur angepasst. Die zusätzlichen oberen bzw. unteren Längsträger sind an die Abmessungen der Bodenkonstruktion, insbesondere an die Abmessungen des Motortunnelbleches angepasst. Die zusätzlichen oberen bzw. unteren Längsträger können über hiervon abragende Befestigungsflansche durch Punktschweißen, Nahtschweißen, Verschraubungen, Nietungen und/oder Strukturklebung auf dem Motortunnelblech und gegebenenfalls an Stirnwand, Sitzquerträger oder sonstigen Querträgern der Bodenkonstruktion befestigt sein.

Die Werkstoffeigenschaften der oberen bzw. unteren Längsträger können sich in Abhängigkeit von ihren Belastungen und ihrer Geometrie von denen des Motortunnelbleches unterscheiden. Sämtliche der zusätzlichen Längsträger können entweder als einteilge Bauteile oder als separate, in ihrer Längsrichtung abschnittsweise ausgebildete, mehrteilige Bauteile ausgeführt sein, wobei letztere durch in Querrichtung verlaufende Verschweißungen, Klebungen, Nietungen oder Verschraubungen miteinander verbindbar sein können. Die von den zusätzlichen Längsträgern abragenden Befestigungsflansche können entweder durchgehend oder abschnittsweise ausgebildet sein. Des weiteren können von den zusätzlichen Längsträgern abgedeckte Hohlräume zwecks Geräuschdämmung mittels eines Kunststoffschaumes ausgeschäumt sein.

Gemäß einer weiteren, vorteilhaften Ausgestaltung der Erfindung kann zusätzlich zu den anordbaren Längsträgern ein in einem oberen Bereich des Motortunnelbleches gebildeter oberer Horizontalabschnitt zwecks Längsverstärkung des Motortunnelbleches bereichsweise von wengistens einem zusätzlichen, im Querschnitt etwa hutförmig profilierten Längsträger abgedeckt und mit diesem verbunden sein, wobei der obere Horizontalabschnitt des Motortunnelbleches längs desselben zusammen mit dem zusätzlichen, wenigstens einen Längsträger querschnittsmäßig etwa die Form eines geschlossenen Kastenträgers bildet.

Gemäß einer weiteren Ausgestaltung der Erfindung kann der wenigstens eine hutförmig profitierte Längsträger entweder wenigstens fahrerhausinnenseitig oder wenigstens motorseitig des Motortunnelbleches angeordnet sein.

Vorteilhafte Ausgestaltung und Weiterbildungen bzw. Ergänzungen dieser Lösung sind in den Unteransprüchen angegeben.

Nachstehend sind die erfindungsgemäßen Lösungen anhand in der Zeichnung dargestellter Ausführungsbeispiele noch näher erläutert.

In der Zeichnung zeigen:
- Fig. 1: in perspektivischer Explosionsdarstellung von schräg hinten gesehen eine erste Ausführungsvariante eines mit zusätzlichen oberen Längsträgern verstärkbaren Motortunnelbleches einer Bodenkonstruktion eines Lkw-Fahrerhauses.
- Fig. 2: schematisch und im Querschnitt eine erste Ausführungsvariante einer Bodenkonstruktion gemäß Fig. 1 mit im oberen Bereich des Motortunnelbleches angeordneten Längsträgern,
- Fig. 3: schematisch und im Querschnitt eine zweite Ausführungsvariante einer Bodenkonstruktion mit im unteren Bereich des Motortunnelbleches angeordneten Längsträgern,
- Fig. 4: schematisch und im Querschnitt weitere, untereinander kombinierbare Ausführungsvarianten einer Bodenkonstruktion mit in einem oberen und/oder einem unteren Bereich des Motortunnelbleches fahrerhausinnenseitig angeordneten Längsträgern,
- Fig. 5: schematisch und im Querschnitt weitere, untereinander kombinierbare Ausführungsvarianten einer Bodenkonstruktion mit in einem oberen und/oder unteren Bereich des Motortunnelbleches motorseitig angeordneten Längsträgern,
- Fig. 6: schematisch und im Querschnitt weitere, untereinander kombinierbare Ausführungsvarianten einer Bodenkonstruktion mit in einem oberen Horizontalbereich des Motortunnelbleches fahrerhausinnenseitig und/oder motorseitig anordbaren Längsträgern und
- Fig. 7: schematisch und in einem Längsschnitt ein an einer Stirnwand und an einem Sitzquerträger einer Bodenkonstruktion befestigter, das Motortunnelblech verstärkender Längsträger.

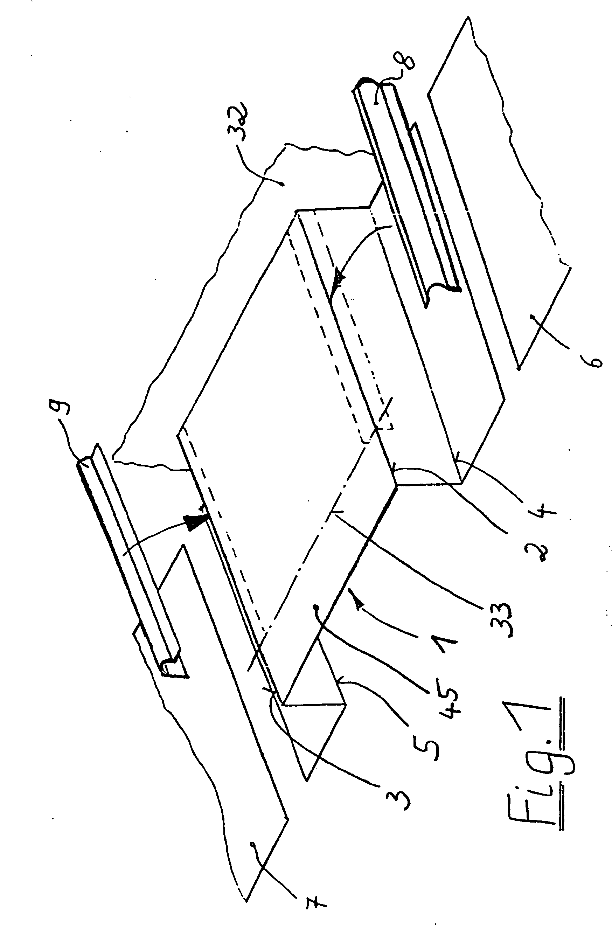

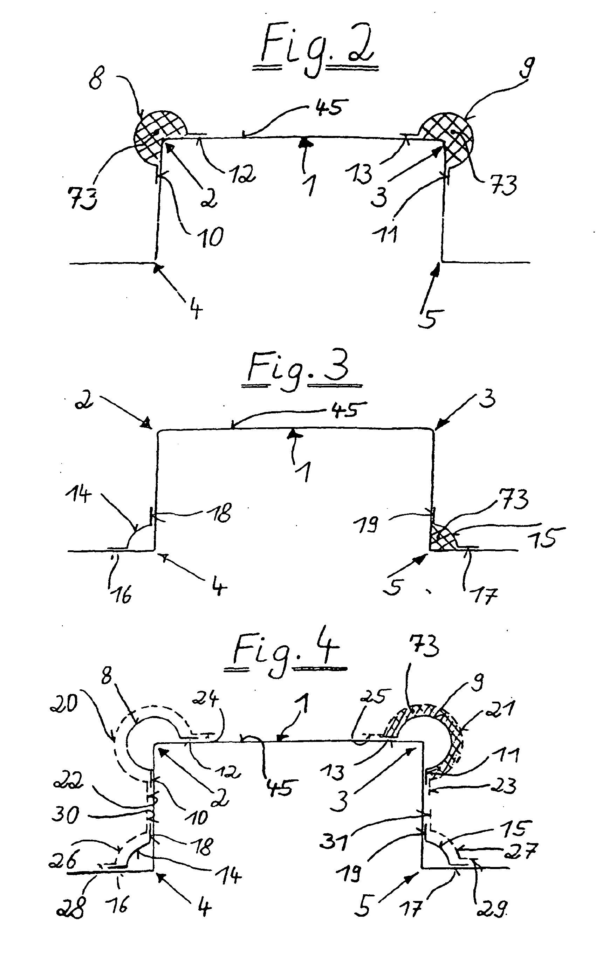

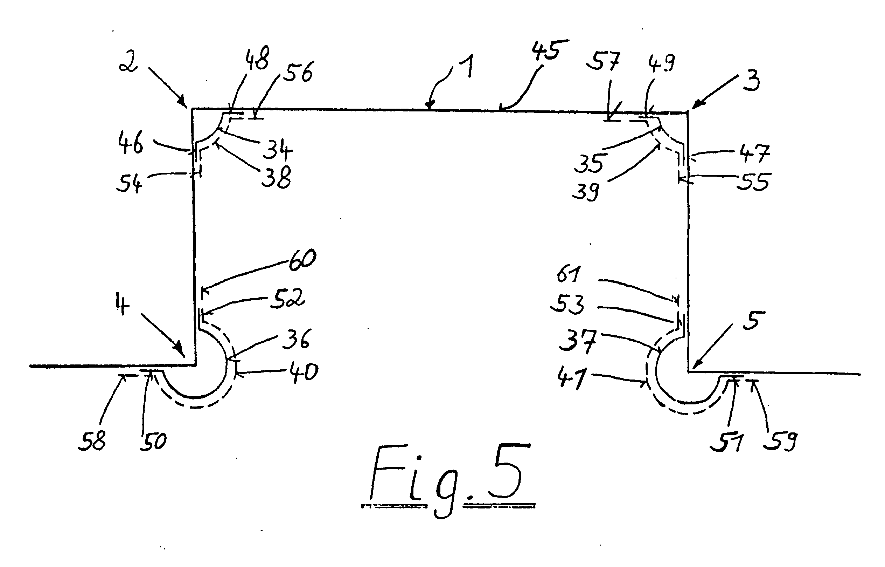

In Fig. 1 ist in perspektivischer Explosionsdarstellung von schräg hinten gesehen eine Bodenkonstruktion eines Lkw-Fahrerhauses mit im wesentlichen einem etwa hutförmig geformten Motortunnelblech 1 sowie beidseitig desselben daran angeschlossenen Bodenblechen 6, 7 gezeigt. Die der Bodenkonstruktion ebenfalls zugehörigen inneren und äußeren Längsträger sind aus Übersichtlichkeitsgründen nicht gezeigt. Das Motortunnelblech 1, die Bodenbleche 6, 7 sowie die hier nicht gezeigten Längsträger sind jeweils durch Blechpreßteile gebildet. Das Motortunnelblech 1 weist in einem oberen Bereich zwei zueinander etwa parallel verlaufende obere Längskanten 2, 3 auf, die zwecks Längsverstärkung des Motortunnelbleches 1 fahrerhausinnenseitig von jeweils einem zusätzlichen, etwa hutförmig profilierten oberen Längsträger 8, 9 abgedeckt und mit diesem mittels einer bekannten Verbindungsart, beispielsweise einer Punktschweißung, einer Nahtschweißung, einer Verschraubung, einer Vernietung und/oder einer Strukturklebung verbunden sind. Dabei bilden die zusätzlichen oberen Längsträger 8, 9 nach ihrer Befestigung an den oberen Längskanten 2, 3 des Motortunnelbleches 1 zusammen mit diesen einen sich längs derselben erstreckenden, geschlossenen Kastenträger (Fig. 2). Ferner ist das Motortunnelblech 1 frontseitig an einer Stirnwand 32 befestigt und weist in einem rückwärtigen Bereich einen hier nur strichpunktiert angedeuteten Querträger einer Sitzbefestigung 33 auf. Die beiden oberen Längsträger 8, 9 erstrecken sich längs des Motortunnelbleches 1 zwischen Stirnwand 32 und Sitzbefestigung 33 und sind an diesen über hier nicht dargestellte, querverlaufende Flansche befestigbar.

Die in Fig. 2 in einer Schnittdarstellung ersichtlichen, an den zusätzlichen oberen Längsträgern 8, 9 außen vorgesehenen, einteilig mit diesen gebildeten Befestigungsflansche 10, 12; 11, 13 sind für ihre Verbindung mit dem Motortunnelblech 1 entweder komplett durchgehend oder nur abschnittsweise ausgebildet. Die von den oberen Längsträgern 8, 9 abgedeckten Hohlräume können mit einem Kunststoffschaum 73 ausgeschäumt sein.

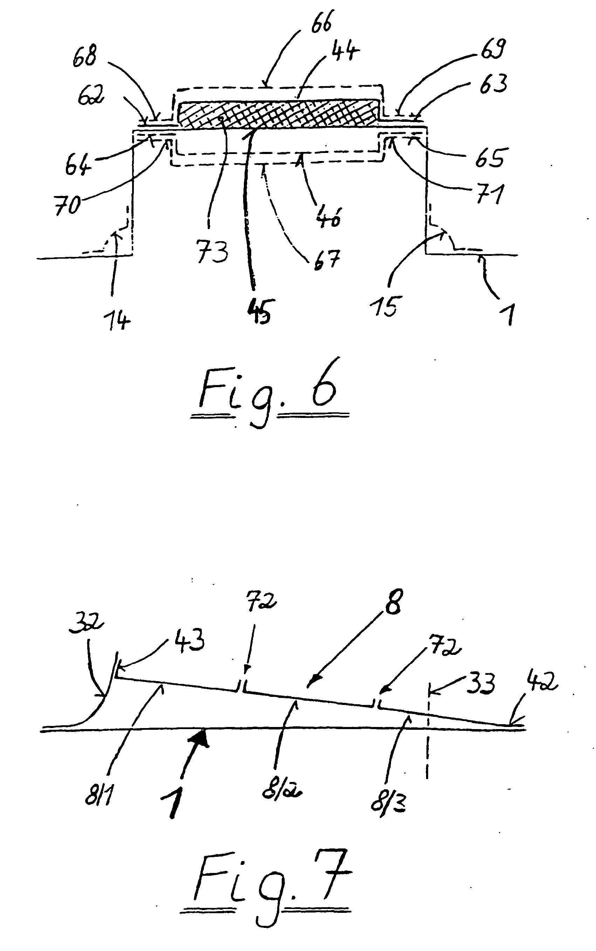

In Fig. 3 ist eine weitere Variante einer Verstärkung eines Motortunnelbleches 1 gezeigt. In dieser Version sind in einem unteren Bereich des Hutprofiles des Motortunnelbleches 1 fahrerhausinnenseitig zwei zueinander etwa parallel verlaufende untere Längskanten 4, 5 zwecks Längsverstärkung des Motortunnelbleches 1 von zusätzlichen, etwa hutförmig profilierten unteren Längsträgern 14, 15 abgedeckt und mit diesen mittels einer Verbindungsart, wie beispielsweise einer Punktschweißung, einer Nahtschweißung, einer Verschraubung, einer Nietung und/oder einer Strukturklebung verbunden. Dabei bilden entsptrechend der ersten Version der Bodenkonstruktion die zusätzlichen unteren Längsträger 14, 15 nach ihrer Befestigung im Bereich der unteren Längskanten 4, 5 zusammen mit diesen einen sich längs derselben erstreckenden, geschlossenen Kastenträger. Die das Motortunnelblech 1 verstärkenden unteren Längsträger 14, 15 weisen außen entweder komplett durchgehende oder abschnittsweise verlaufende Befestigungsflansche 16, 18; 17, 19 für eine Verbindung mit dem unteren Bereich des Hutprofiles des Motortunnelbleches 1 auf.

In Fig. 4 ist schematisch mit durchgezogener Linierung eine dritte Variante einer Bodenkonstruktion eines Lkw-Fahrerhauses im Querschnitt gezeigt. Hierbei ist das Motortunnelblech 1 sowohl im Bereich seiner oberen Längskanten 2, 3 als auch im Bereich seiner unteren Längskanten 4, 5 von zusätzlichen oberen bzw. unteren Längsträgern 8, 9; 14, 15 jeweils fahrerhausinnenseitig verstärkt

In strichlierter Linierung ist eine vierte Variante einer Bodenkonstruktion gezeigt. Hierbei sind die zusätzlichen oberen und unteren Längsträger 8, 9; 14, 15 von weiteren oberen bzw. unteren Längsträgern 20, 21; 26, 27 abgedeckt und mit diesen über an ihrem Umfang durchgehend oder partiell verlaufenden Befestigungsflanschen 22, 24; 23, 25; 28, 30; 29, 31 verbunden. Die zusätzlichen oberen und unteren Längsträger 20, 21; 26, 27 können durch eine Punktschweißung, eine Nahtschweißung, eine Verschraubung, eine Nietung und/oder eine Strukturklebung an ihrem jeweiligen Anordnungsort befestigt sein. Die zusätzlichen oberen und unteren Längsträger 20, 21; 26, 27 können über hier nicht gezeigte, querverlaufende Flansche zusätzlich an der Stirnwand 32 und/oder an einem Querträgber der Sitzbefestigung 33 und/oder an den querverlaufenden Flanschen 42, 43 (Fig. 7) der darunter befindlichen Längsträger 8, 9; 14, 15 befestigbar sein.

In Fig. 5 ist schematisch mit durchgezogener Linierung eine fünfte Variante einer Bodenkonstruktion eines Lkw-Fahrerhauses im Querschnitt gezeigt. Hierbei ist das Motortunnelblech 1 sowohl im Bereich seiner oberen Längskanten 2, 3 als auch im Bereich seiner unteren Längskanten 4, 5 von zusätzlichen oberen bzw. unteren Längsträgern 34, 35; 36, 37 jeweils motorseitig verstärkt. Deren Befestigungsflansche 46, 48; 47, 49; 50, 52; 51, 53 sind jeweils auf dem Motortunnelblech 1 aufliegend mit diesem über eine der vorgenannten Verbindungsarten verbunden.

In strichlinierter Linierung ist eine sechste Ausführungsvariante einer Bodenkonstruktion eines Lkw-Fahrerhauses im Querschnitt gezeigt. Hierbei sind - entsprechend Fig. 4 - die zusätzlichen oberen und unteren Längsträger 34, 35; 36, 37 von weiteren oberen bzw. unteren Längsträgern 38, 39; 40, 41 abgedeckt und mit diesen und/oder mit dem Motortunnelblech 1 über an ihrem Umfang durchgehend oder partiell verlaufenden Befestigungsflanschen 54, 56; 55, 57; 58, 60; 59, 61 über eine der vorgenannten Verbindungsarten verbunden.

In einer hier gezeigten Version können sämtliche Längsträger in beliebig kombinierbaren Anordnungsmöglichkeiten, sowohl fahrerhausinnenseitig als auch motorseitig am Motortunnelblech 1 befestigbar sein.

In Fig. 6 sind schematisch und im Querschnitt weitere, untereinander und gegebenenfalls zusätzlich mit den in Fig. 4 und Fig. 5 beschriebenen möglichen Ausführungsvarianten kombinierbare Ausgestaltungsversionen einer Bodenkonstruktion eines Lkw-Fahrerhauses gezeigt. So ist in durchgezogener Linierung ein in einem oberen Bereich des Motortunnelbleches 1 gebildeter oberer Horizontalabschnitt 45 fahrerhausinnenseitig zwecks Längsverstärkung des Motortunnelbleches 1 bereichsweise von einem zusätzlichen, im Querschnitt etwa hutförmig profilierten Längsträger 44 abgedeckt und mit diesem über hiervon abragende Befestigungsflansche 62, 63 verbunden. Hierbei bildet der obere Horizontalabschnitt 45 des Motortunnelbleches 1 längs desselben zusammen mit dem zusätzlichen Längsträger 44 querschnittsmäßig etwa die Form eines geschlossenen Kastenträgers.

Alternativ hierzu kann gemäß den mit strichlierten Linierungen gekennzeichneten Ausführungen das Motortunnelblech 1 und gegebenenfalls der hierauf befindliche zusätzliche Längsträger 44 von weiteren Längsträgern 46, 66, 67 abgedeckt sein.

Diese können fahrerhausinnenseitig und/oder motorseitig angeordnet und mit Befestigungsflanschen 64, 65; 68, 69; 70, 71 auf dem Motortunnelblech 1 und gegebenenfalls auf den Befestigungsflanschen 62, 63 des Längsträgers 44 zumindest bereichsweise befestigt sein. Die Längsträger 44, 46, 66, 67 können mit den übrigen Längsträgern entsprechend Fig. 4 und Fig. 5 bedarfsweise kombiniert werden. Gegebenenfalls können die zusätzlichen Längsträger 44, 46, 66, 67 mit unter anderem unteren Längsträgern 14, 15 kombiniert werden.

Unabhängig von der Kombination der Anordnung der Längsträger am Motortunnelblech 1 können von diesen Längsträgern abgedeckte Hohlräume zwecks Geräuschdämmung mittels eines Kunststoffschaumes 73, beispielsweise einem PU-Schaum ausgeschäumt sein (Figuren 2, 3, 4 und 6).

Unabhängig von der Ausführungsart der Bodenkonstruktion können sich, wie in Fig. 7 in einem Längsschnitt gezeigt, die zusätzlichen oberen und/oder unteren Längsträger 8, 9; 14, 15; 20, 21; 26, 27 wenigstens bereichsweise zwischen einer vorderen Stirnwand 32 und einer Sitzbefestigung, beispielsweise einem Sitzquerträger 33 des Fahrerhauses erstrecken. Der hier gezeigte obere Längsträger 8 ist zusätzlich zu seiner vorgenannt beschriebenen Befestigung auf dem Motortunnelblech 1 mittels längs verlaufender Befestigungsflansche 10, 12 (Fig. 2) des weiteren an der vorderen Stirnwand 32 über einen zusätzlichen, querverlaufenden Flansch 43 und an dem Sitzquerträger 33 über einen zusätzlichen, querverlaufenden Flansch 42 befestigt. Der Längsträger 8 ist in dem hier gezeigten Ausführungsbeispiel durch in Längsrichtung unterteilte, durch in Querrichtung verlaufende Schweißnähte 72 miteinander verbundene, separate Abschnitte 8/1, 8/2, 8/3 gebildet. Die Anzahl der Abschnitte kann je nach Erfordernis variieren. Anstelle von Schweißnähten können auch Verklebungen, Verschraubungen oder Vernietungen treten. Die separaten Abschnitte 8/1, 8/2, 8/3 des Längsträgers 8 können sich hierbei bereichsweise einander untergreifen bzw. überlappen und/oder gegebenenfalls Bohrungen zur Aufnahme der Schraub- oder Nietverbindungen aufweisen.

## Patentansprüche

1. Bodenkonstruktion eines Lkw-Fahrerhauses, mit im wesentlichen einem etwa hutförmig geformten Motortunnelblech (1), gegebenenfalls mehreren Bodenblechen (6, 7) sowie inneren und äußeren Längs- bzw. Querträgern, wobei in einem oberen und einem unteren Bereich des Hutprofiles des Motortunnelbleches (1) gebildete, zueinander beabstandet verlaufende obere und untere Längskanten (2, 3; 4, 5) zwecks Längsverstärkung des Motortunnelbleches (1) von zusätzlichen, im Querschnitt etwa hutförmig profilierten Längsträgern abgedeckt und mit diesen verbunden sind, **dadurch gekennzeichnet, dass** das Motortunnelblech (1) im Bereich wenigstens seiner oberen Längskanten (2, 3) längs derselben zusammen mit zusätzlichen oberen Längsträgern (8, 9) querschnittsmäßig etwa die Form von geschlossenen Kastenträgern bildet und dass die längs des Motortunnelbleches (1) auf diesem aufliegend befestigten, zusätzlichen oberen Längsträger (8, 9) fahrerhausinnenseitig des Motortunnelbleches (1) angeordnet sind.

2. Bodenkonstruktion nach Anspruch 1, **dadurch gekennzeichnet, dass** das Motortunnelblech (1) im Bereich seiner unteren Längskanten (4, 5) längs derselben zusammen mit zusätzlichen unteren Längsträgern (14, 15) querschnittsmäßig etwa die Form von geschlossenen Kastenträgern bildet und dass die längs des Motortunnelbleches (1) auf diesem aufliegend befestigten, zusätzlichen unteren Längsträger (14, 15) fahrerhausinnenseitig des Motortunnelbleches (1) angeordnet sind.

3. Bodenkonstruktion einem der Ansprüche 1 und 2, **dadurch gekennzeichnet**, das zusätzlich zu den anordbaren Längsträgern (8,9; 14,15) ein in einem oberen Bereich des Motortunnelbleches (1) gebildeter oberer Horizontalabschnitt (45) zwecks Längsverstärkung des Motortunnelbleches (1) bereichsweise von wenigstens einem zusätzlichen, im Querschnitt etwa hutförmig profilierten Längsträger (44, 46) abgedeckt und mit diesem verbunden ist, wobei der obere Horizontalabschnitt (45) des Motortunnelbleches (1) längs desselben zusammen mit dem zusätzlichen wenigstens einen Längsträger (44, 46) querschnittsmäßig etwa die Form eines geschlossenen Kastenträgers bildet.

4. Bodenkonstruktion nach Anspruch 3, **dadurch gekennzeichnet, dass** ein hutförmig profitierter Längsträger (44,46) entweder wenigstens fahrerhausinnenseitig oder wenigstens motorseitig des Motortunnelbleches (1) angeordnet ist.

5. Bodenkonstruktion nach einem oder mehreren der vorangegangenen Ansprüche 1 bis 4, **dadurch gekennzeichnet, dass** die zusätzlichen oberen und unteren Längsträger (8, 9; 44, 46; 14, 15) mit endseitig ihrer hutförmigen Profile gebildeten Befestigungsflanschen (10, 12; 11, 13; 16, 18, 17, 19; 62, 63; 64, 65) auf dem Motortunnelblech (1) aufliegend mittels einer Verschweißung, Strukturklebung oder einer Verschraubung befestigt sind.

6. Bodenkonstruktion nach einem der oder mehreren der vorangegangenen Ansprüche 1 bis 5, **dadurch gekennzeichnet, dass** die zusätzlichen oberen und unteren Längsträger (8, 9; 14, 15; 44, 46) von jeweils weiteren, diese zusätzlich verstärkenden oberen und unteren, etwa hutförmig profilierten Längsträgern (20, 21; 26, 27; 66, 67) abgedeckt und mit diesen und/oder dem Motortunnelblech (1) verbunden sind, und dass die verstärkenden zusätzlichen oberen bzw. unteren Längsträger (20, 21; 26, 27; 66, 67) mit endseitig ihrer hutförmigen Profile gebildeten Befestigungsflanschen (22, 24; 23, 25; 28, 30; 29, 31; 68, 69; 70, 71) auf dem Motortunnelblech (1) und/oder auf den jeweiligen Befestigungsflanschen (10, 12; 11, 13; 16, 18; 17, 19; 62, 63; 64, 65) der oberen bzw. unteren Längsträger (8, 9; 14, 15; 44, 46) aufliegend mittels einer Verschweißung, einer Strukturklebung oder eine Verschraubung befestigt sind.

7. Bodenkonstruktion nach einem der vorangegangenen Ansprüche 1 bis 6, **dadurch gekennzeichnet, dass** die zusätzlichen oberen bzw. unteren Längsträger (8, 9; 14, 15; 20, 21; 26, 27; 44, 46; 66, 67) sich wenigstens bereichsweise zwischen einer vorderen Stirnwand (32) und einer Sitzbefestigung (33) der Bodenkonstruktion des Fahrerhauses erstrecken und gegebenenfalls über zusätzliche Flansche (42, 43) mit der vorderen Stirnwand (32) und/oder einem Querträger der Sitzbefestigung (33) verbunden sind.

8. Bodenkonstruktion nach einem oder mehreren der vorangegangenen Ansprüche 1 bis 7, **dadurch gekennzeichnet, dass** sämtliche oberen bzw. unteren Längsträger (8, 9; 14, 15; 20, 21; 26, 27; 44, 46; 66, 67) als einteilige Bauteile und/oder als separate, in ihrer Längsrichtung abgesetzt ausgebildete, mehrteilige Bauteile ausgeführt sind, die durch in Querrichtung verlaufende Verschweißungen (72), Strukturklebungen oder Verschraubungen miteinander verbindbar sind.

9. Bodenkonstruktion nach einem oder mehreren der vorangegangenen Ansprüche 1 bis 8, **dadurch gekennzeichnet, dass** von den zusätzlichen Längsträgern (8, 9; 14, 15; 20, 21; 26, 27; 44, 46; 66, 67) abgedeckte Hohlräume zwecks Geräuschdämmung mittels eines Kunststoffschaumes (73) ausgeschäumt sind, und dass sämtliche Befestigungsflansche (10, 12; 11, 13; 16, 18; 17, 19; 22, 24; 23, 25; 28, 30; 29, 31; 62, 63; 64, 65; 68, 69; 70, 71) entweder durchgehend oder abschnittsweise ausgebildet sind.

10. Bodenkonstruktion nach einem oder mehreren der vorangegangenen Ansprüche 1 bis 9, **dadurch gekennzeichnet, dass** als Verschweißungsart Naht- oder Punktschweißungen und anstelle von Verschraubungen bekannte Nietungen vorsehbar sind.

## Claims

1. Floor construction of a truck cab, basically with a roughly hat-shaped engine-tunnel panel (1), if necessary with several floor panels (6, 7) and internal and external longitudinal and transverse members, whereby in an upper and in a lower area of the hat-shaped section of the engine-tunnel panel (1) upper and lower longitudinal edges (2, 3; 4, 5) formed for the longitudinal reinforcement of the engine-tunnel panel (1) are arranged at a distance relative to each other, covered by and connected with additional longitudinal members with roughly hat-shaped cross-section, **characterised in that** in the area of at least its upper longitudinal edges (2, 3) the engine-tunnel panel (1) together with additional upper longitudinal members (8, 9) roughly has the cross-section of closed box-type members extending alongside said upper longitudinal edges (2, 3) and that the additional upper longitudinal members (8, 9) extend alongside, contact, are fastened to and arranged on that side of the engine-tunnel panel (1) which faces the cab interior.

2. Floor construction according to Claim 1, **characterised in that** in the area of its lower longitudinal edges (4, 5) the engine-tunnel panel (1) together with additional lower longitudinal members (14, 15) roughly has the cross-section of closed box-type members extending alongside said lower longitudinal edges (4, 5) and that the additional lower longitudinal members (14, 15) extend alongside, contact, are fastened to and arranged on that side of the engine-tunnel panel (1) which faces the cab interior.

3. Floor construction according to one of the Claims 1 and 2, **characterised in that** in addition to the arrangeable longitudinal members (8, 9; 14, 15), an upper horizontal section (45) formed in the upper area of the engine-tunnel panel (1) is, for the purpose of longitudinally reinforcing the engine-tunnel panel (1), covered in some areas by at least one additional longitudinal member (44, 46) of roughly hat-shaped cross-section and is connected with it, whereby the upper horizontal section (45) of the engine-tunnel panel (1) extends alongside said engine-tunnel panel (1) and, together with the at least one additional longitudinal member (44, 46), roughly has the cross-section of a closed box-type member.

4. Floor construction according to Claim 3, **characterised in that** a longitudinal member (44, 46) of hat-shaped section is arranged either at least on the cab-interior side or at least on the engine side of the engine-tunnel panel (1).

5. Floor construction according to one or several of the aforementioned Claims 1 to 4, **characterised in that** the mounting flanges (10, 12; 11, 13; 16, 18, 17, 19; 62, 63; 64, 65) provided on the end of the hat-shaped sections of the additional upper and lower longitudinal members (8, 9; 44, 46; 14, 15) contact the engine-tunnel panel (1) and are fastened to it by means of welding, structural bonding or a bolted connection.

6. Floor construction according to one or several of the aforementioned Claims 1 to 5, **characterised in that** the additional upper and lower longitudinal members (8, 9; 14, 15; 44, 46) are each covered by further upper and lower longitudinal members (20, 21; 26, 27; 66, 67) of roughly hat-shaped section additionally reinforcing said members (8, 9; 14, 15; 44, 46) connected with these members (20, 21; 26, 27; 66, 67) and/or with the engine-tunnel panel (1) and that the mounting flanges (22, 24; 23, 25; 28, 30; 29, 31; 68, 69; 70, 71) provided on the ends of the hat-shaped sections of the reinforcing additional upper and lower longitudinal members (20, 21; 26, 27; 66, 67) contact the engine-tunnel panel (1) and/or the respective mounting flanges (10, 12; 11, 13; 16, 18; 17, 19; 62, 63; 64, 65) of the upper and lower longitudinal members (8, 9; 14, 15; 44, 46;) and are fastened to them by means of welding, structural bonding or a bolted connection.

7. Floor construction according to one of the aforementioned Claims 1 to 6, **characterised in that** the additional upper and lower longitudinal members (8, 9; 14, 15; 20, 21; 26, 27; 44, 46; 66, 67) extend at least partially between a front wall (32) and a seat mounting (33) in the floor construction of the cab and, if necessary, are connected via additional flanges (42, 43) with the front wall (32) and/or with a cross member of the seat mounting (33).

8. Floor construction according to one or several of the aforementioned Claims 1 to 7, **characterised in that** all upper and lower longitudinal members (8, 9; 14, 15; 20, 21; 26, 27; 44, 46; 66, 67) are designed as single-piece components and/or as separate components which are offset in their longitudinal direction, consist of several parts and can be connected with one another by means of welding (72), structural bonding or a bolted connections provided in transverse direction.

9. Floor construction according to one or several of the aforementioned Claims 1 to 8, **characterised in that** for the purpose of sound attenuation cavities covered by the additional longitudinal members (8, 9; 14, 15; 20, 21; 26, 27; 44, 46; 66, 67) are filled with synthetic foam (73) and that all mounting flanges (10, 12; 11, 13; 16, 18; 17, 19; 22, 24; 23, 25; 28, 30; 29, 31; 62, 63; 64, 65; 68, 69; 70, 71) are designed as being either continuous or divided into sections.

10. Floor construction according to one or several of the aforementioned Claims 1 to 9, **characterised in that** welds may be provided in the form of seam or spot welds and well-known riveted connections may be envisaged instead of bolted connections.

## Revendications

1. Construction de plancher d'une cabine de camion constituée essentiellement d'une tôle de tunnel moteur (1) en forme de chapeau et, le cas échéant, de plusieurs tôles de plancher (6, 7) ainsi que de longerons et de traverses intérieurs et extérieurs, auquel cas des bords longitudinaux supérieurs et inférieurs (2, 3 ; 4, 5), formés dans une zone supérieure et inférieure de la tôle de tunnel moteur (1) en profilé en forme de chapeau et disposés à distance l'un par rapport à l'autre assurant ainsi le renfort longitudinal de la tôle de tunnel moteur (1) sont recouverts de longerons en profilé en forme de chapeau en coupe transversale et reliés à ces longerons, **caractérisée en ce que** la tôle de tunnel moteur (1) présente au moins dans la zone de ses bords longitudinaux supérieurs (2, 3), le long de ces bords et conjointement avec des longerons supérieurs supplémentaires (8, 9), approximativement la forme de poutres en caisson fermées en coupe transversale et que les longerons supérieurs supplémentaires (8, 9) fixés le long de la tôle de tunnel moteur (1) et reposant sur cette tôle sont disposés côté habitacle de la tôle de tunnel moteur (1).

2. Construction de plancher selon la revendication 1, **caractérisée en ce que** la tôle de tunnel moteur (1) présente dans la zone de ses bords longitudinaux inférieurs (4, 5), le long de ces bords et conjointement avec des longerons inférieurs supplémentaires (14, 15), approximativement la forme de poutres en caisson fermées en coupe transversale et que les longerons inférieurs supplémentaires (14, 15) fixés le long de la tôle de tunnel moteur (1) et reposant sur cette tôle sont disposés côté habitacle de la tôle de tunnel moteur (1).

3. Construction de plancher selon l'une des revendications 1 et 2, **caractérisée en ce qu'**en plus des longerons à disposer (8, 9 ; 14, 15), un segment horizontal (45) réalisé dans une zone supérieure de la tôle de tunnel moteur (1) est recouvert, par sections, d'au moins un longeron supplémentaire en profilé en forme de chapeau en coupe transversale (44, 46) et relié à ce longeron assurant ainsi le renfort longitudinal de la tôle de tunnel moteur (1), auquel cas le segment horizontal supérieur (45) de la tôle de tunnel moteur (1) présente le long de cette tôle, conjointement avec au moins un longeron supplémentaire (44, 46), approximativement la forme d'une poutre en caisson fermée en coupe transversale.

4. Construction de plancher selon la revendication 3, **caractérisée en ce qu'**un longeron en profilé en forme de chapeau (44, 46) est disposé soit au moins côté habitacle, soit au moins côté moteur de la tôle de tunnel moteur (1).

5. Construction de plancher selon l'une ou plusieurs des revendications 1 à 4 mentionnées précédemment, **caractérisée en ce que** les longerons supérieurs et inférieurs supplémentaires (8, 9 ; 44, 46 ; 14, 15) sont fixés avec leurs plateaux de fixation (10, 12 ; 11, 13 ; 16, 18 ; 17, 19 ; 62, 63 ; 64, 65) formés à l'extrémité de leurs profilés en forme de chapeau sur la tôle de tunnel moteur (1) par soudage, collage de structure ou boulonnage et reposent sur cette tôle.

6. Construction de plancher selon l'une ou plusieurs des revendications 1 à 5 mentionnées précédemment, **caractérisée en ce que** les longerons supérieurs et inférieurs supplémentaires (8, 9 ; 14, 15 ; 44, 46) sont recouverts chacun d'autres longerons supérieurs et inférieurs en profilé en forme de chapeau (20, 21 ; 26, 27 ; 66, 67) les renforçant en plus et reliés à ces longerons et/ou à la tôle de tunnel moteur (1), et que les longerons de renfort supérieurs et inférieurs supplémentaires (20, 21 ; 26, 27 ; 66, 67) sont fixés avec leurs plateaux de fixation (22, 24 ; 23, 25 ; 28, 30 ; 29, 31 ; 68, 69 ; 70, 71) formés à l'extrémité de leurs profilés en forme de chapeau sur la tôle de tunnel moteur (1) et/ou sur les plateaux de fixation (10, 12 ; 11, 13 ; 16, 18 ; 17, 19 ; 62, 63 ; 64, 65) des longerons supérieurs et inférieurs (8, 9 ; 14, 15 ; 44, 46) par soudage, collage de structure ou vissage et reposent sur cette tôle et/ou ces longerons.

7. Construction de plancher selon l'une ou plusieurs des revendications 1 à 6 mentionnées précédemment, **caractérisée en ce que** les longerons supérieurs et inférieurs supplémentaires (8, 9 ; 14, 15 ; 20, 21 ; 26, 27 ; 44, 46 ; 66, 67) s'étendent, au moins par sections, entre une paroi frontale avant (32) et une fixation de siège (33) de la construction de plancher de la cabine et sont reliés, le cas échéant, à la paroi frontale avant (32) et/ou à une traverse de la fixation de siège (33) au moyen de plateaux supplémentaires (42, 43).

8. Construction de plancher selon l'une ou plusieurs des revendications 1 à 7 mentionnées précédemment, **caractérisée en ce que** tous les longerons supérieurs et inférieurs (8, 9 ; 14, 15 ; 20, 21 ; 26, 27 ; 44, 46 ; 66, 67) sont réalisés sous forme d'éléments en une partie et/ou sous forme d'éléments séparés en plusieurs parties, découpés dans leur sens longitudinal qui sont reliés les uns aux autres par des soudages (72), des collages de structure ou des boulonnages réalisés dans le sens transversal.

9. Construction de plancher selon l'une ou plusieurs des revendications 1 à 8 mentionnées précédemment, **caractérisée en ce que** les cavités recouvertes par les longerons supérieurs et inférieurs supplémentaires (8, 9 ; 14, 15 ; 20, 21 ; 26, 27 ; 44, 46 ; 66, 67) sont comblées d'une mousse d'insonorisation en matière synthétique (73) et que tous les plateaux de fixation (10, 12 ; 11, 13 ; 16, 18 ; 17, 19 ; 22, 24 ; 23, 25 ; 28, 30 ; 29, 31 ; 62, 63 ; 64, 65 ; 68, 69 ; 70, 71) sont réalisés, soit d'un seul tenant soit par sections.

10. Construction de plancher selon l'une ou plusieurs des revendications 1 à 9 mentionnées précédemment, **caractérisée en ce que** les soudages sont des soudages en cordon ou par points et que des rivetages connus peuvent être prévus au lieu des boulonnages.
